# EUROPEAN PATENT SPECIFICATION

(11) **EP 2 682 963 B1**
(45) Date of publication and mention of the grant of the patent: **24.08.2016**
(21) Application number: 12174706.7
(22) Date of filing: 03.07.2012
(51) Int. Cl.: H01G 4/38, H01G 2/08, H02K 7/02, B60L 11/18, H01G 2/00

(54) **A capacitive energy-storage for a mobile working machine**
Kapazitive Energiespeicherung für eine mobile Arbeitsmaschine
Stockage d'énergie capacitif destiné à une machine de travail mobile

(43) Date of publication of application: 08.01.2014
(73) Proprietor: Visedo Oy, 53850 Lappeenranta (FI)
(72) Inventor: Järveläinen, Tero, 53850 Lappeenranta (FI)
(74) Representative: Berggren Oy Ab

(56) References cited:
- EP-A2- 0 514 840
- WO-A1-2006/048431
- WO-A2-2008/020463
- GB-A- 613 627
- US-A1- 2008 141 875
- US-B1- 6 294 886

## Description

### Field of the invention

The invention relates generally to capacitive energy-storages. More particularly, the invention relates to a capacitor module suitable for being a basic construction unit of a capacitive energy-storage and to a capacitive energy-storage having a modular structure. Furthermore, the invention relates to a mobile working machine comprising an electromechanical power transmission chain.

### Background

An electromechanical power transmission chain comprises typically one or more electrical machines and an electronic power converter. The electromechanical power transmission chain can be a series transmission chain where one of the electrical machines operates as generator and the electronic power converter is arranged to convert the electrical voltages produced by the generator into electrical voltages having amplitudes and frequencies suitable for the one or more other electrical machines. The generator can be driven with a combustion engine that can be e.g. a diesel engine, an Otto-cycle engine, or a turbine engine. The other electrical machines can be, for example, electrical motors in wheels of a mobile working machine. The electronic power converter comprises typically an intermediate circuit, a converter stage between the generator and the intermediate circuit and one or more other converter stages between the intermediate circuit and the other electrical machines. Furthermore, there is usually a need for a converter stage between the intermediate circuit and an overvoltage protection resistor and for a converter stage between the intermediate circuit and an energy-storage such as a battery and/or a high capacitance capacitor. It is also possible that the electromechanical power transmission chain is a parallel transmission chain where the generator is occasionally used as a motor that assists the combustion engine, especially when high output power is needed. In this case, the electronic power converter comprises typically an intermediate circuit, a converter stage between the generator and the intermediate circuit, and one or more converter stages between the intermediate circuit and one or more energy-storages. Furthermore, also in conjunction with a parallel transmission chain, there is usually a need for a converter stage for controlling the operation of an overvoltage protection resistor.

As an electromechanical power transmission chain comprises typically many converter stages, energy-storages, and an overvoltage protection resistor, the number of components is high and, consequently, the arrangement of the components and cabling between the components may be complicated and space-consuming. Furthermore, the cooling arrangements related to the converter stages, energy-storages, and the overvoltage protection resistor may also be complicated and space-consuming because of the high number of objects to be cooled.

A typical way to increase the integration level is to use power electronic modules which have an integrated structure and comprise power electronic components so that, for example, a main circuit of the converter stage connected to a generator can be implemented with a single power electronic module. Typically, a power electronic module of the kind mentioned above comprises switching branches each of which comprising a first electrical node, a second electrical node, a third electrical node, and controllable power switches for selecting whether the third electrical node is connected to the first electrical node or to the second electrical node. As the number of phases of an alternating voltage system is typically three, a standard power electronic module contains three switching branches. Each controllable power switch may be, for example but not necessarily, an insulated gate bipolar transistor "IGBT" provided with an anti-parallel diode.

WO2006/048431 describes a capacitor module comprising a liquid cooling system, the module is suitable for being a basic construction unit of a capacitive energy storage for a mobile machine.

In spite of the power electronic modules of the kind described above, there are still challenges regarding to implementation, cabling, control, and/or cooling of other elements such as a capacitive energy-storage that is typically connected to an intermediate circuit with one or more electronic DC-to-DC power converters. Furthermore, there can be challenges regarding to cabling and/or cooling of one or more inductor coils which are typically parts of the above-mentioned electronic DC-to-DC power converters.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention, there is provided a new capacitor module according to claim 1 that is suitable for being a basic construction unit of a modular capacitive energy-storage. The capacitor module according to the invention comprises:
- a capacitor element,
- a first voltage terminal connected to a first pole of the capacitor element,
- a second voltage terminal connected to a second pole of the capacitor element,
- a cooling duct system for cooling the capacitor element,
- a housing encapsulating the capacitor element and the cooling duct system, the housing comprising wiring lead-throughs for the first and second voltage terminals and piping lead-throughs for the cooling duct system, and
- one or more inductor coils inside the housing and for smoothing current of the capacitor module, each of the inductor coils being connected between a pole of the first voltage terminal and the first pole of the capacitor element so that the first pole of the capacitor element is connected to the pole of the first voltage terminal via the inductor coil under consideration,
wherein walls of the cooling duct system isolate interior space of the cooling duct system from space surrounding the cooling duct system inside the housing.

The housing, the wiring lead-throughs, and the piping lead-throughs are advantageously designed to prevent water and/or external impurities from penetrating into the capacitor module. As the capacitor module is encapsulated and comprises the cooling ducts and the wiring and piping lead-throughs, modular capacitive energy-storages of different sizes can be built by interconnecting capacitor modules of the kind described above, and there is no need to build separately an encapsulation provided with cooling ducts.

The capacitor element of the capacitor module may comprise, for example, an electric double-layer capacitor "EDLC" which is often called a "super capacitor", or many electrically interconnected electric double-layer capacitors.

A capacitor module according an advantageous, exemplifying embodiment of the invention further comprises measuring equipment located inside the housing and configured to measure data related to the capacitor module, and a data interface capable of transmitting the measured data to an external data transfer system. The measured data can indicate, for example, current of the capacitor element, voltage of the capacitor element, currents of parallel connected sub-elements of the capacitor element, voltages of series connected sub-elements of the capacitor element, and/or temperature inside the housing. The external data transfer system can be, for example, a Control Area Network "CAN".

In accordance with the second aspect of the invention, there is provided a new capacitive energy-storage according to claim 9 that comprises:
- a capacitor system comprising at least two electrically interconnected capacitor modules of the kind described above and according to the invention, and
- a piping connecting the cooling duct systems of the capacitor modules to each other so as to enable the capacitive energy-storage to be connected to an external coolant circulation system.

In the capacitive energy-storage, one of the capacitor modules comprises one or more inductor coils inside the housing of this capacitor module. Each of the inductor coils can be used as a part of an electronic power converter connected to the capacitor system and configured to change voltage of the capacitor system. Thus, there is no need to install inductors coils outside the capacitor modules.

In a capacitive energy-storage according an advantageous, exemplifying embodiment of the invention, one of the capacitor modules comprises a controller located inside the housing of this capacitor module and connected to other capacitors modules via a data transfer system, e.g. a CAN. The controller is configured to generate data related to the capacitive energy-storage on the basis of data measured at the capacitor modules. The generated data can indicate, for example, voltage of the capacitive energy-storage, current of the capacitive energy-storage, power received or given by the capacitive energy storage, voltage distribution between series connected capacitor modules, current distribution between parallel connected capacitor modules, and/or maximum temperature of the capacitive energy-storage. Furthermore, the controller can be configured to control, on the basis of the generated data, an over-voltage protection resistor and/or an electronic power converter connected to the capacitor system and configured to change voltage of the capacitor system.

In accordance with the third aspect of the invention, there is provided a new mobile working machine. The mobile working machine comprises:
- a combustion engine, and
- an electromechanical power transmission chain between the combustion engine and one or more wheels, chain tracks, or other actuators of the mobile working machine,
wherein the electromechanical transmission chain comprises at least one capacitive energy-storage according to the present invention.

The mobile working machine comprises preferably a liquid cooling system connected to the piping of the capacitive energy-storage and configured to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

A number of non-limiting exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verbs "to comprise" and "to include" are used in this document as an open limitation that neither exclude nor require the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figure 1 shows a schematic illustration of a capacitor module according to an exemplifying embodiment of the invention,
figure 2 shows a schematic illustration of a capacitive energy-storage according to an exemplifying embodiment of the invention, and
figure 3 shows a schematic illustration of a mobile working machine according to an exemplifying embodiment of the invention.

### Description of the exemplifying embodiments

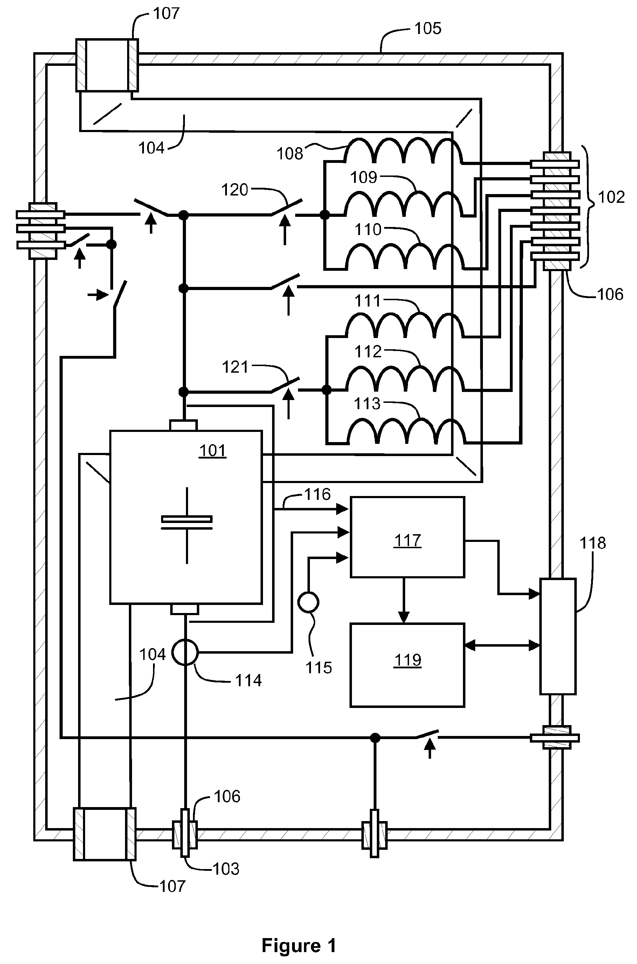

Figure 1 shows a schematic section-view of a capacitor module according to an exemplifying embodiment of the invention. The capacitor module comprises a capacitor element 101 that may comprise, for example, an electric double-layer capacitor "EDLC" which is often called a "super capacitor", or many electrically interconnected electric double-layer capacitors; e.g. many series connected capacitors, many parallel connected capacitors, or series connected sets of parallel connected capacitors. The capacitor module comprises a first voltage terminal 102 connected to a first pole of the capacitor element 101, and a second voltage terminal 103 connected to a second pole of the capacitor element. The capacitor module comprises a cooling duct system 104 for conducting coolant so as to cool the capacitor element. The capacitor module comprises a housing 105 that encapsulates the capacitor element 101 and the cooling duct system 104. The housing comprises wiring lead-throughs 106 for the first and second voltage terminals 102 and 103, and piping lead-throughs 107 for the cooling duct system 104. In the exemplifying case illustrated in figure 1, the cooling duct system 104 is a tube between the piping lead-throughs 107. The walls of the tube isolate the interior space of the cooling duct system from the space surrounding the cooling duct system inside the housing 105. Therefore, the cooling duct system 104 is suitable for liquid cooling.

The housing 105, the wiring lead-throughs 106, and the piping lead-throughs 107 are advantageously designed to prevent water and/or external impurities from penetrating into the capacitor module. For example, the housing, the wiring lead-throughs, and the piping lead-throughs can be designed to prevent at least ingress of solid particles greater than 1 mm. It is also possible that the housing, the wiring lead-throughs, and the piping lead-throughs constitute a dust protected or dust-tight structure. Furthermore, the structure can be jet water protected or water-tight. The Ingress Protection rating "IP" classification of the structure is advantageously at least IP55, more advantageously IP65-IP68. More information about the IP classification can be found from the international standard IEC 60529. As the capacitor module is encapsulated and comprises the cooling ducts and the wiring and piping lead-throughs, modular capacitive energy-storages of different sizes can be built by interconnecting capacitor modules of the kind described above, and there is no need to build separately an encapsulation provided with cooling ducts.

A capacitor module according to an exemplifying embodiment of the invention comprises one or more inductor coils inside the housing so that each of the inductor coils is connected between a pole of the first voltage terminal 102 and the first pole of the capacitor element. In the exemplifying case illustrated in figure 1, the capacitor module comprises inductor coils 108, 109, 110, 111, 112, and 113. Each of these inductor coils is suitable for being an inductor coil of an electronic DC-to-DC power converter that is, in some cases, needed for changing voltage. The cooling duct system 104 is preferably configured to cool also the inductor coils 108-113 as illustrated in figure 1. As the inductor coils are inside the capacitor module, the implementation of the above-mentioned electronic DC-to-DC power converter is easier and simpler.

A capacitor module according to an exemplifying embodiment of the invention comprises measuring equipment located inside the housing and configured to measure data related to the capacitor module. The measured data can indicate, for example, current of the capacitor element 101, voltage of the capacitor element, currents of parallel connected sub-elements of the capacitor element, voltages of series connected sub-elements of the capacitor element, and/or temperature inside the housing. The measuring equipment may comprise, for example, a current sensor 114, a temperature sensor 115, a voltage sensor 116, and a signal converter 117 for converting the output signals of these sensors to a desired digital form. The capacitor module comprises a data interface 118 capable of transmitting the measured data to an external data transfer system that can be, for example, a Control Area network "CAN".

A capacitor module according to an exemplifying embodiment of the invention comprises a controller 119 connected to the data interface 118 and to the signal converter 117 of the measuring equipment. In this case, the data interface 118 is preferably capable of both transmitting and receiving data to and from an external data transfer system, e.g. a CAN. The controller 119 can be configured to generate control data, monitoring data, and/or alarm data on the basis of data measured in the capacitor module and/or on the basis of data received at the data interface 118. Monitoring data may indicate, for example, voltage, current and/or maximum temperature of a capacitive energy-storage comprising the capacitor module and one or more other capacitor modules. Alarm data may indicate, for example, that a measured value, e.g. measured temperature, has exceeded its highest allowable value. Control data may contain, for example, signals for operating controllable elements of the capacitor module and/or controllable elements connected to the capacitor module.

A capacitor module according to an exemplifying embodiment of the invention comprises switches 120 and 121 on a current path between the first and second direct voltage terminals 102 and 103, and the controller 119 is configured to operate the switches on the basis of measured data and/or data received at the data interface 118. As illustrated by figure 1, the capacitor module may comprise also other switches which may be controllable with the controller 119. The switches can be, for example, current-operated relays or semiconductor switches. The switches can be used, for example, for controlling operation of a pre-charge/discharge resistor that is not shown in figure 1.

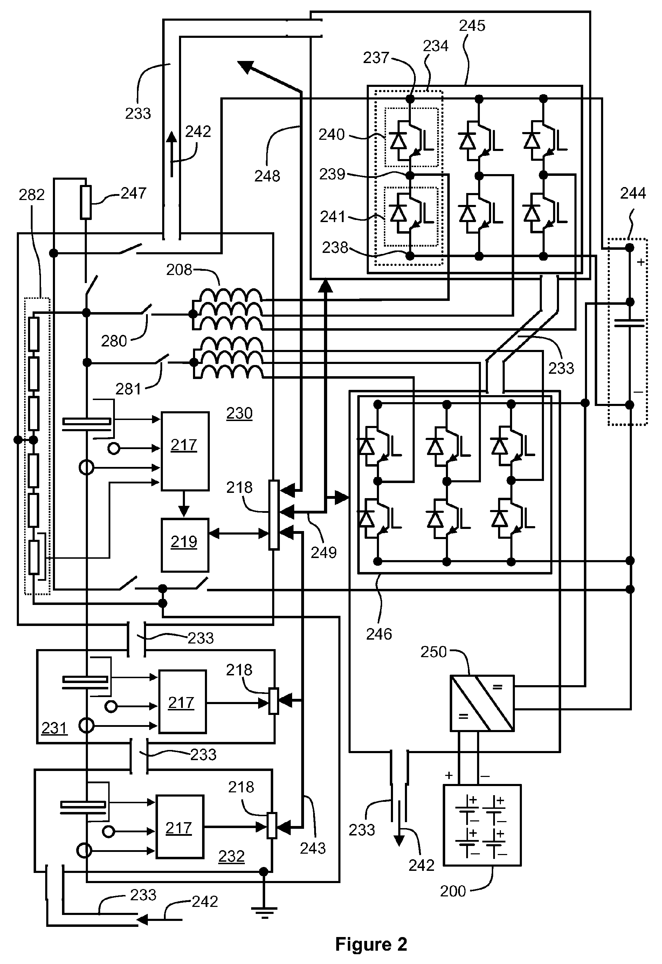

Figure 2 shows a schematic illustration of a capacitive energy-storage according to an exemplifying embodiment of the invention. The capacitive energy-storage comprises a capacitor system comprising series connected capacitor modules 230, 231, and 232. Each of the capacitor modules 230-232 comprises a capacitor element, voltage terminals connected to poles of the capacitor element, a cooling duct system, and a housing encapsulating the capacitor element and the cooling duct system. The capacitive energy-storage comprises a piping 233 connecting the cooling duct systems of the capacitor modules to each other so as to enable the capacitive energy-storage to be connected to an external coolant circulation system. The arrows 242 shown in figure 2 illustrate a flow of coolant arranged to cool the capacitive energy-storage. The coolant is preferably liquid but it is also possible that the coolant is gaseous.

In a capacitive energy-storage according to an exemplifying embodiment of the invention, each of the capacitor modules 230-232 comprises measuring equipment located inside the housing of the capacitor module and configured to measure data related to the capacitor module under consideration. The measuring equipment may comprise, for example, voltage, current, and temperature sensors and a signal converter 217 for converting the output signals of the sensors to a desired digital form. Each of the capacitor modules 230-232 comprises a data interface 218 capable of transmitting the measured data to an external data transfer system 243 that can be, for example, a CAN-bus between the capacitor modules.

A capacitive energy-storage according to an exemplifying embodiment of the invention comprises electronic DC-to-DC power converters configured to change voltage of the capacitor system comprising the series connected capacitor modules 230-232. Each of the electronic DC-to-DC power converters comprises an inductor coil that is located inside the housing of the first capacitor module 230 and a power electronic circuit located outside the housings of the capacitor modules. For example, the main circuit of one of the DC-to-DC power converters comprises the inductor coil 208 and the power electronic circuit 234. The power electronic circuit 234 comprises a first electrical node 237 connected to a positive pole of a direct polarity link 244, a second electrical node 238 connected to a negative pole of the direct polarity link 244, a third electrical node 239 connected to the inductor coil 208 related to this DC-to-DC power converter, and controllable power switches 240 and 241 for selecting whether the third electrical node 239 is connected to the first electrical node 237 or to the second electrical node 238. In the exemplifying case shown in figure 2, the direct polarity link 244 is a direct voltage link comprising a capacitor. Each controllable power switch may be, for example, an insulated gate bipolar transistor "IGBT" provided with an anti-parallel diode as illustrated in figure 1, or a gate-turn-off "GTO" thyristor provided with an anti-parallel diode, or some other suitable power electronic component.

The above-described electronic DC-to-DC power converter can be operated as a step-down DC-to-DC converter when transferring energy from the direct polarity link 244 to the capacitor modules 230-232, and as a step-up DC-to-DC converter when transferring energy from the capacitor modules 230-232 to the direct polarity link 224. The step-down operation can be achieved by switching the controllable power switch 240 on and off when the diode of the controllable power switch 241 operates as a free-wheeling diode. The step-up operation can be achieved by switching the controllable power switch 241 on and off when the diode of the controllable power switch 240 operates as a charging diode. In the exemplifying case illustrated in figure 2, there are, in total, six parallel connected electronic DC-to-DC power converters of the kind described above. Two or more of these electronic DC-to-DC power converters are preferably operated with interleaved duty-cycles in order to reduce the voltage ripple at the direct polarity link 244 and/or to reduce the switching losses. The six electronic DC-to-DC power converters can be implemented with two six pack modules 245 and 246 as illustrated in figure 2. The six pack modules can be, for example, SEMIKRON SKiM459GD12E4 modules.

In a capacitive energy-storage according to an exemplifying embodiment of the invention, the power electronic circuits of the electronic DC-to-DC power converters are provided with cooling ducts connected to the piping 233. In this case, the same flow of coolant 242 which cools the capacitor modules 230-232 cools also the power electronic circuits of the electronic DC-to-DC power converters.

In a capacitive energy-storage according to an exemplifying embodiment of the invention, the first capacitor module 230 comprises a controller 219 located inside the housing of the first capacitor module and connected to the data interface 218 of the first capacitor module and to the signal converter 217 of the measuring equipment of the first capacitor module. The controller 219 can be configured to generate control data, monitoring data, and/or alarm data related to the capacitive energy-storage on the basis of data measured in the capacitor modules 230-232 and/or data received from a data transfer system 248. The data transfer system 248 can be, for example, a CAN-bus between the capacitive energy-storage and other parts of a device, e.g. a mobile working machine, comprising the capacitive energy-storage. In this exemplifying embodiment of the invention, the first capacitor module 230 is a controlling capacitor module, i.e. a master capacitor module, and the capacitor modules 231 and 232 are slave capacitor modules. Monitoring data may indicate, for example, voltage of the capacitive energy-storage, current of the capacitive energy-storage, power received or delivered by the capacitive energy storage, voltage distribution between the series connected capacitor modules 230-232, and/or maximum temperature occurring in the capacitive energy-storage. Alarm data may indicate, for example, that one or more measured quantities deviate too much from their allowed areas.

In a capacitive energy-storage according to an exemplifying embodiment of the invention, the controller 219 is configured to control the electronic DC-to-DC power converters shown in figure 2 the basis of control data based on data measured in the capacitor modules 230-232 and/or data received from the data transfer system 248. Communication between the controller 219 and the electronic DC-to-DC power converters can be implemented with, for example, a CAN-bus 249. Furthermore, the controller 219 can be configured to control switches of the capacitor module 230 so that a resistor 247 operates, when needed, as a pre-charge resistor or as a discharge resistor of the series connected capacitor modules 230-232.

In a capacitive energy-storage according to an exemplifying embodiment of the invention, the first capacitor module 230 comprises one or more protection relays 280, 281 located inside the housing of the first capacitor module and the controller 219 is configured to control the protection relays to break-off the current of the capacitive energy-storage in response to at least one of the following situations: the current of the capacitive energy-storage exceeds a pre-determined limit current, voltage of the capacitive energy-storage exceeds a pre-determined limit voltage, temperature of the capacitive energy-storage exceeds a pre-determined limit temperature.

In a capacitive energy-storage according to an exemplifying embodiment of the invention, the first capacitor module 230 comprises a fault-current detector 282 located inside the housing of the first capacitor module and configured to detect leakage current between a high voltage terminal of the capacitor system and the housings of the capacitor modules and leakage current between a low voltage terminal of the capacitor system and the housings of the capacitor modules. The fault-current detector 282 can be, for example but not necessarily, a resistor chain as illustrated in figure 2. The resistor chain provides voltage division between the high and low voltage terminals of the capacitor system. One point of the resistor chain is connected to the housing of the first capacitor module 230 as illustrated in figure 2. If there is any leakage current between the high voltage terminal and the housings of the capacitor modules or between the low voltage terminal and the housings of the capacitor modules, the voltage division is changed, and this can be detected by measuring voltage of one of the resistors.

A capacitive energy-storage according to an exemplifying embodiment of the invention comprises an electronic DC-to-DC power converter 250 suitable for operating between the direct polarity link 244 and a battery 251. The battery can be, for example, a 12 V / 24 V battery. It is also possible that the battery 251 has a significantly higher voltage than 12 V or 24 V, i.e. the battery 251 can be a high-voltage "HV" battery.

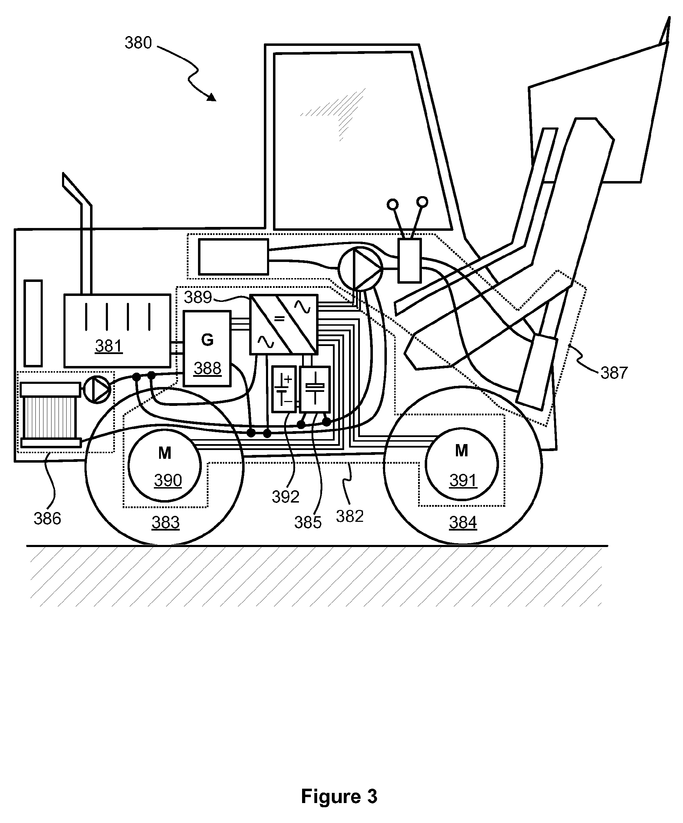

Figure 3 shows an illustration of a mobile working machine 380 according to an exemplifying embodiment of the invention. In this exemplifying case, the mobile working machine is a bucket charger but the mobile working machine could as well be a tractor, a road drag, a bulldozer, or any other working machine having wheels and/or chain tracks. The mobile working machine comprises a combustion engine 381 that can be e.g. a diesel engine, an Otto-cycle engine, or a turbine engine. The mobile working machine comprises an electromechanical power transmission chain 382 between the combustion engine 381 and wheels 383, 384 of the mobile working machine. The electromechanical transmission chain comprises a generator 388 the rotor of which is connected to the shaft of the combustion engine. The electromechanical transmission chain comprises an electronic power converter 389 and electrical motors 390, 391 at the hubs of the wheels of the mobile working machine. The electronic power converter 389 is arranged to convert the electrical voltage produced by the generator 388 into electrical voltages having amplitudes and frequencies suitable for the electrical motors 390, 391. The electromechanical transmission chain further comprises a capacitive energy-storage 385 comprising at least two electrically interconnected capacitor modules. Each of the capacitor modules comprises a capacitor element, voltage terminals connected to poles of the capacitor element, a cooling duct system, and a housing encapsulating the capacitor element and the cooling duct system. One of the capacitor modules comprises preferably a controller that controls all the capacitor modules as illustrated earlier with the aid of figure 2. The capacitive energy-storage 385 comprises a piping that connects the cooling duct systems of the capacitor modules to each other.

A mobile working machine according to an exemplifying embodiment of the invention comprises a liquid cooling system 386 connected to the piping of the capacitive energy-storage 385 and configured to cool the electromechanical power transmission chain 382 and a hydraulic system 387 of the mobile working machine.

A mobile working machine according to an exemplifying embodiment of the invention comprises a liquid cooling system 386 connected to the piping of the capacitive energy-storage and configured to cool the electromechanical power transmission chain 382 and the combustion engine 381.

A mobile working machine according to an exemplifying embodiment of the invention comprises a battery 392 which, together with the capacitive energy-storage 385, can be used for responding to peak power needs exceeding the maximum power of the combustion engine 381.

The specific examples provided in the description given above should not be construed as limiting the applicability and/or interpretation of the appended claims.

## Claims

1. A capacitor module for storing direct voltage, the capacitor module comprising:
- a capacitor element (101),
- a first voltage terminal (102) connected to a first pole of the capacitor element,
- a second voltage terminal (103) connected to a second pole of the capacitor element,
- a cooling duct system (104) for cooling the capacitor element, and
- a housing (105) encapsulating the capacitor element and the cooling duct system, the housing comprising wiring lead-throughs (106) for the first and second voltage terminals and piping lead-throughs (107) for the cooling duct system, wherein walls of the cooling duct system isolate interior space of the cooling duct system from space surrounding the cooling duct system inside the housing,
**characterized in that** the capacitor module comprises one or more inductor coils (108-113) inside the housing and for smoothing current of the capacitor module, each of the inductor coils being connected between a pole of the first voltage terminal (102) and the first pole of the capacitor element so that the first pole of the capacitor element is connected to the pole of the first voltage terminal via the inductor coil under consideration.

2. A capacitor module according to claim 1, wherein the housing, the wiring lead-throughs, and the piping lead-throughs are configured to prevent solid particles greater than 1 mm from penetrating into the space surrounding the cooling duct system inside the housing.

3. A capacitor module according to claim 2, wherein the housing, the wiring lead-throughs, and the piping lead-throughs are configured to seal the space surrounding the cooling duct system inside the housing to be at least one of the following: dust-tight, water-tight.

4. A capacitor module according to any of claims 1-3, wherein the capacitor module comprises measuring equipment (114-117) located inside the housing and configured to measure data related to the capacitor module, and a data interface (118) capable of transmitting the measured data to an external data transfer system.

5. A capacitor module according to claim 4, wherein the measuring equipment is configured to measure data indicative of at least one of the following: current of the capacitor element, voltage of the capacitor element, currents of parallel connected sub-elements of the capacitor element, voltages of series connected sub-elements of the capacitor element, temperature inside the housing.

6. A capacitor module according to claim 4 or 5, wherein the data interface is capable of receiving data from the external data transfer system and the capacitor module comprises a controller (119) connected to the data interface and to the measuring equipment, the controller being configured to generate data related to a capacitive energy-storage comprising the capacitor module and one or more other capacitor modules on the basis of the measured data and the data received from the external data transfer system.

7. A capacitor module according to claim 6, wherein the controller is configured to generate data indicating at least one of the following: voltage of the capacitive energy-storage on the basis of data indicative of voltages of the capacitor module and the one or more other capacitor modules, current of the capacitive energy-storage on the basis of data indicative of currents of the capacitor module and the one or more other capacitor modules, maximum temperature of the capacitive energy-storage on the basis of data indicative of temperatures of the capacitor module and the one or more other capacitor modules.

8. A capacitor module according to any of claims 1-7, wherein the capacitor element comprises one or more electric double-layer capacitors.

9. A capacitive energy-storage comprising:
- a capacitor system comprising at least two electrically interconnected capacitor modules (230-232) each comprising a capacitor element, a first voltage terminal connected to a first pole of the capacitor element, a second voltage terminal connected to a second pole of the capacitor element, a cooling duct system for cooling the capacitor element, and a housing encapsulating the capacitor element and the cooling duct system, the housing comprising wiring lead-throughs for the first and second voltage terminals and piping lead-throughs for the cooling duct system, and walls of the cooling duct system isolating interior space of the cooling duct system from space surrounding the cooling duct system inside the housing , and
- a piping (233) connecting the cooling duct systems of the capacitor modules to each other so as to enable the capacitive energy-storage to be connected to an external coolant circulation system,
wherein one of the capacitor modules is a first capacitor module (230) according to any of claims 1-8.

10. A capacitive energy-storage according to claim 9, wherein each of the capacitor modules comprises measuring equipment located inside the housing of the capacitor module and configured to measure data related to this capacitor module, and each of the capacitor modules comprises a data interface capable of transmitting the measured data to an external data transfer system.

11. A capacitive energy-storage according to claim 9 or 10, wherein the capacitive energy-storage comprises at least one electronic power converter connected to the capacitor system and configured to change voltage of the capacitor system, the electronic power converter comprising the inductor coil (208) located inside the housing of the first capacitor module and a power electronic circuit (234) located outside the housings of the capacitor modules.

12. A capacitive energy-storage according to claim 11, wherein the capacitive energy-storage comprises a cooling duct connected to the piping and configured to cool the power electronic circuit of the electronic power converter.

13. A capacitive energy-storage according to claim 11 or 12, wherein the power electronic circuit (234) of the electronic power converter comprises a first electrical node (237), a second electrical node (238) connected to the capacitor system, a third electrical node (239) connected to the inductor coil (208), and controllable power switches (240, 241) for selecting whether the third electrical node is connected to the first electrical node or to the second electrical node.

14. A capacitive energy-storage according to any of claims 10-13, wherein the first capacitor module comprises a controller (219) located inside the housing of the first capacitor module and connected to the data interface of the first capacitor module and to the measuring equipment of the first capacitor module, the controller being configured to generate data related to the capacitive energy-storage at least partly on the basis of data measured in the capacitor modules.

15. A capacitive energy-storage according to claim 14, wherein the first capacitor module comprises one or more protection relays (280, 281) located inside the housing of the first capacitor module and the controller (219) is configured to control the protection relays to break-off current of the capacitive energy-storage in response to at least one of the following situations: the current of the capacitive energy-storage exceeds a pre-determined limit current, voltage of the capacitive energy-storage exceeds a pre-determined limit voltage, temperature of the capacitive energy-storage exceeds a pre-determined limit temperature.

16. A capacitive energy-storage according to any of claims 9-14, wherein the first capacitor module comprises a fault-current detector (282) located inside the housing of the first capacitor module and configured to detect leakage current between a high voltage terminal of the capacitor system and the housings of the capacitor modules and leakage current between a low voltage terminal of the capacitor system and the housings of the capacitor modules.

17. A mobile working machine (380) comprising:
- a combustion engine (381), and
- an electromechanical power transmission chain (382) between the combustion engine and one or more actuators of the mobile working machine,
wherein the electromechanical power transmission chain comprises a capacitive energy-storage (385) according to any of claims 9-16.

18. A mobile working machine according to claim 17, wherein the mobile working machine comprises a liquid cooling system (386) connected to the piping of the capacitive energy-storage and configured to cool the electromechanical power transmission chain and a hydraulic system (387) of the mobile working machine.

19. A mobile working machine according to claim 17, wherein the mobile working machine comprises a liquid cooling system (386) connected to the piping of the capacitive energy-storage and configured to cool the electromechanical power transmission chain and the combustion engine.

## Patentansprüche

1. Kondensatormodul zum Speichern von Gleichspannung, wobei das Kondensatormodul umfasst:
- ein Kondensatorelement (101),
- einen ersten Spannungsanschluss (102), welcher mit einem ersten Pol des Kondensatorelements verbunden ist,
- einen zweiten Spannungsanschluss (103), welcher mit einem zweiten Pol des Kondensatorelements verbunden ist,
- ein Kühlleitungssystem (104) zum Kühlen des Kondensatorelements, und
- ein Gehäuse (105), welches das Kondensatorelement und das Kühlleitungssystem umschließt, wobei das Gehäuse Kabeldurchführungen (106) für den ersten und den zweiten Spannungsanschluss und Leitungsdurchführungen (107) für das Kühlleitungssystem umfasst, wobei Wände des Kühlleitungssystems einen inneren Raum des Kühlleitungssystems von einem Raum, welcher das Kühlleitungssystem in dem Gehäuse umgibt, isolieren, **dadurch gekennzeichnet, dass** das Kondensatormodul eine oder mehrere Induktionsspulen (108 - 113) in dem Gehäuse und zum Glätten eines Stroms des Kondensatormoduls umfasst, wobei jede der Induktionsspulen zwischen einem Pol des ersten Spannungsanschlusses (102) und dem ersten Pol des Kondensatorelements verbunden ist, so dass der erste Pol des Kondensatorelements mit dem Pol des ersten Spannungsanschlusses über die betrachtete Induktionsspule verbunden ist.

2. Kondensatormodul nach Anspruch 1, wobei das Gehäuse, die Kabeldurchführungen und die Leitungsdurchführungen dazu eingerichtet sind, Feststoffpartikel, welche größer sind als 1 mm, von einem Eindringen in den das Kühlleitungssystem in dem Gehäuse umgebenden Raum zu verhindern.

3. Kondensatormodul nach Anspruch 2, wobei das Gehäuse, die Kabeldurchführungen und die Leitungsdurchführungen dazu eingerichtet sind, den das Kühlleitungssystem umgebenden Raum in dem Gehäuse abzudichten, um wenigstens eines aus dem Folgenden zu sein: staubdicht, wasserdicht.

4. Kondensatormodul nach einem der Ansprüche 1 - 3, wobei das Kondensatormodul Messequipment (114 - 117), welches in dem Gehäuse angeordnet ist und dazu eingerichtet ist, Daten bezüglich des Kondensatormoduls zu messen, und eine Datenschnittstelle (118) umfasst, welche in der Lage ist die gemessenen Daten an ein externes Datentransfersystem zu übertragen.

5. Kondensatormodul nach Anspruch 4, wobei das Messequipment dazu eingerichtet ist, Daten zu messen, welche wenigstens eines aus dem Folgenden anzeigen: einen Strom des Kondensatorelements, eine Spannung des Kondensatorelements, Ströme von parallel verbundenen Unterelementen des Kondensatorelements, Spannungen von in Reihe verbundenen Unterelementen des Kondensatorelements, eine Temperatur in dem Gehäuse.

6. Kondensatormodul nach Anspruch 4 oder 5, wobei die Datenschnittstelle in der Lage ist, Daten von dem externen Datentransfersystem zu empfangen, und das Kondensatormodul eine Regel-/Steuereinrichtung (119) umfasst, welche mit der Datenschnittstelle und dem Messequipment verbunden ist, wobei die Regel-/Steuereinrichtung dazu eingerichtet ist, Daten bezüglich eines kapazitiven Energiespeichers zu erzeugen, umfassend das Kondensatormodul und ein oder mehrere andere Kondensatormodule, auf der Grundlage der gemessenen Daten und der von dem externen Datentransfersystem empfangenen Daten.

7. Kondensatormodul nach Anspruch 6, wobei die Regel-/Steuereinrichtung dazu eingerichtet ist, Daten zu erzeugen, welche wenigstens eines aus dem Folgenden anzeigen: eine Spannung des kapazitiven Energiespeichers auf der Grundlage von Daten, welche Spannungen des Kondensatormoduls und des einen oder der mehreren anderen Kondensatormodule anzeigen, einen Strom des kapazitiven Energiespeichers auf der Grundlage von Daten, welche Ströme des Kondensatormoduls und des einen oder der mehreren anderen Kondensatormodule anzeigen, eine maximale Temperatur des kapazitiven Energiespeichers auf der Grundlage von Daten, welche Temperaturen des Kondensatormoduls und des einen oder der mehreren anderen Kondensatormodule anzeigen.

8. Kondensatormodul nach einem der Ansprüche 1 - 7, wobei das Kondensatorelement einen oder mehrere elektrische Doppelschicht-Kondensatoren umfasst.

9. Kapazitiver Energiespeicher, umfassend:
- ein Kondensatorsystem, umfassend wenigstens zwei elektrisch miteinander verbundene Kondensatormodule (230 - 232), wobei jedes ein Kondensatorelement, einen ersten Spannungsanschluss, welcher mit einem ersten Pol des Kondensatorelements verbunden ist, einen zweiten Spannungsanschluss, welcher mit einem zweiten Pol des Kondensatorelements verbunden ist, ein Kühlleitungssystem zum Kühlen des Kondensatorelements und ein Gehäuse umfasst, welches das Kondensatorelement und das Kühlleitungssystem umschließt, wobei das Gehäuse Kabeldurchführungen für den ersten und den zweiten Spannungsanschluss und Leitungsdurchführungen für das Kühlleitungssystem umfasst, und Wände des Kühlleitungssystems einen inneren Raum des Kühlleitungssystems von einem das Kühlleitungssystem umgebenden Raum in dem Gehäuse isolieren, und
- eine Leitung (233), welche die Kühlleitungssysteme der Kondensatormodule miteinander verbindet, um dem kapazitiven Energiespeicher zu ermöglichen, mit einem externen Kühlmittelzirkulationssystem verbunden zu sein,
wobei eines der Kondensatormodule ein erstes Kondensatormodul (230) gemäß einem der Ansprüche 1 - 8 ist.

10. Kapazitiver Energiespeicher nach Anspruch 9, wobei jedes der Kondensatormodule Messequipment umfasst, welches in dem Gehäuse des Kondensatormoduls angeordnet ist und dazu eingerichtet ist, Daten bezüglich dieses Kondensatormoduls zu messen, und jedes der Kondensatormodule eine Datenschnittstelle umfasst, welche in der Lage ist, die gemessenen Daten an ein externes Datentransfersystem zu übertragen.

11. Kapazitiver Energiespeicher nach Anspruch 9 oder 10, wobei der kapazitive Energiespeicher wenigstens einen elektronischen Leistungskonverter umfasst, welcher mit dem Kondensatorsystem verbunden ist und dazu eingerichtet ist, eine Spannung des Kondensatorsystems zu verändern, wobei der elektronische Leistungskonverter die Induktionsspule (208), welche in dem Gehäuse des ersten Kondensatormoduls angeordnet ist, und einen elektronischen Leistungskreis (234) umfasst, welcher außerhalb der Gehäuse der Kondensatormodule angeordnet ist.

12. Kapazitiver Energiespeicher nach Anspruch 11, wobei der kapazitive Energiespeicher eine Kühlleitung umfasst, welche mit der Leitung verbunden ist und dazu eingerichtet ist, den elektronischen Leistungskreis des elektronischen Leistungskonverters zu kühlen.

13. Kapazitiver Energiespeicher nach Anspruch 11 oder 12, wobei der elektronische Leistungskreis (234) des elektronischen Leistungskonverters einen ersten elektrischen Knoten (237), einen zweiten elektrischen Knoten (238), welcher mit dem Kondensatorsystem verbunden ist, einen dritten elektrischen Knoten (239), welcher mit der Induktionsspule (208) verbunden ist, und regelbare/steuerbare Leistungsschalter (240, 241) zum Auswählen, ob der dritte elektrische Knoten mit dem ersten elektrischen Knoten oder mit dem zweiten elektrischen Knoten verbunden ist, umfasst.

14. Kapazitiver Energiespeicher nach einem der Ansprüche 10 - 13, wobei das erste Kondensatormodul eine Regel-/Steuereinrichtung (219) umfasst, welche in dem Gehäuse des ersten Kondensatormoduls angeordnet ist und mit der Datenschnittstelle des ersten Kondensatormoduls und dem Messequipment des ersten Kondensatormoduls verbunden ist, wobei die Regel-/Steuereinrichtung dazu eingerichtet ist, Daten bezüglich des kapazitiven Energiespeichers zumindest teilweise auf der Grundlage von in den Kondensatormodulen gemessenen Daten zu erzeugen.

15. Kapazitiver Energiespeicher nach Anspruch 14, wobei das erste Kondensatormodul ein oder mehrere Schutzrelais (280, 281) umfasst, welche in dem Gehäuse des ersten Kondensatormoduls angeordnet sind, und die Regel-/Steuereinrichtung (219) dazu eingerichtet ist, die Schutzrelais zu regeln/steuern, um einen Strom des kapazitiven Energiespeichers als Antwort auf wenigstens eine der folgenden Situationen zu unterbrechen: der Strom des kapazitiven Energiespeichers überschreitet einen vorbestimmten Grenzstrom, eine Spannung des kapazitiven Energiespeichers überschreitet eine vorbestimmte Grenzspannung, eine Temperatur des kapazitiven Energiespeichers überschreitet eine vorbestimmte Grenztemperatur.

16. Kapazitiver Energiespeicher nach einem der Ansprüche 9 - 14, wobei das erste Kondensatormodul einen Fehlstromdetektor (282) umfasst, welcher in dem Gehäuse des ersten Kondensatormoduls angeordnet ist und dazu eingerichtet ist, einen Leckstrom zwischen einem Hochspannungsanschluss des Kondensatorsystems und den Gehäusen der Kondensatormodule und einen Leckstrom zwischen einem Niederspannungsanschluss des Kondensatorsystems und den Gehäusen der Kondensatormodule zu erfassen.

17. Mobile Arbeitsmaschine (380), umfassend:
- einen Verbrennungsmotor (381), und
- eine elektromechanische Leistungsübertragungskette (382) zwischen dem Verbrennungsmotor und einem oder mehreren Aktuatoren der mobilen Arbeitsmaschine,
wobei die elektromechanische Leistungsübertragungskette einen kapazitiven Energiespeicher (385) nach einem der Ansprüche 9 - 16 umfasst.

18. Mobile Arbeitsmaschine nach Anspruch 17, wobei die mobile Arbeitsmaschine ein Flüssigkeitskühlsystem (386), welches mit der Leitung des kapazitiven Energiespeichers verbunden ist und dazu eingerichtet ist, die elektromechanische Leistungsübertragungskette zu kühlen, und ein Hydrauliksystem (387) der mobilen Arbeitsmaschine umfasst.

19. Mobile Arbeitsmaschine nach Anspruch 17, wobei die mobile Arbeitsmaschine ein Flüssigkeitskühlsystem (386) umfasst, welches mit der Leitung des kapazitiven Energiespeichers verbunden ist und dazu eingerichtet ist, die elektromechanische Leistungsübertragungskette und den Verbrennungsmotor zu kühlen.

## Revendications

1. Module de condensateur permettant de stocker une tension continue, le module de condensateur comprenant :
- un élément de condensateur (101),
- une première borne de tension (102) connectée à un premier pôle de l'élément de condensateur,
- une seconde borne de tension (103) connectée à un second pôle de l'élément de condensateur,
- un système de canalisation de refroidissement (104) pour refroidir l'élément de condensateur, et
- un boîtier (105) encapsulant l'élément de condensateur et le système de canalisation de refroidissement, le boîtier comprenant des passages de câblage (106) pour les première et seconde bornes de tension et des passages de tuyauterie (107) pour le système de canalisation de refroidissement, dans lequel des parois du système de canalisation de refroidissement isolent l'espace intérieur du système de canalisation de refroidissement de l'espace entourant le système de canalisation de refroidissement à l'intérieur du boîtier,
**caractérisé en ce que** le module de condensateur comprend une ou plusieurs bobines d'induction (108-113) à l'intérieur du boîtier et pour lisser le courant du module de condensateur, chacune des bobines d'induction étant connectée entre un pôle de la première borne de tension (102) et le premier pôle de l'élément de condensateur de sorte que le premier pôle de l'élément de condensateur soit connecté au pôle de la première borne de tension via la bobine d'induction en question.

2. Module de condensateur selon la revendication 1, dans lequel le boîtier, les passages de câblage et les passages de tuyauterie sont configurés pour empêcher les particules solides de plus de 1 mm de pénétrer dans l'espace entourant le système de canalisation de refroidissement à l'intérieur du boîtier.

3. Module de condensateur selon la revendication 2, dans lequel le boîtier, les passages de câblage et les passages de tuyauterie sont configurés pour sceller l'espace entourant le système de canalisation de refroidissement à l'intérieur du boîtier pour le rendre étanche à la poussière et/ou étanche à l'eau.

4. Module de condensateur selon l'une quelconque des revendications 1 à 3, dans lequel le module de condensateur comprend un équipement de mesure (114-117) situé à l'intérieur du boîtier et configuré pour mesurer des données associées au module de condensateur, et une interface de données (118) capable de transmettre les données mesurées à un système de transfert de données externe.

5. Module de condensateur selon la revendication 4, dans lequel l'équipement de mesure est configuré pour mesurer des données indiquant un courant de l'élément de condensateur et/ou une tension de l'élément de condensateur et/ou des courants de sous-éléments connectés en parallèle de l'élément de condensateur et/ou des tensions de sous-éléments connectés en série de l'élément de condensateur et/ou une température à l'intérieur du boîtier.

6. Module de condensateur selon la revendication 4 ou 5, dans lequel l'interface de données est capable de recevoir des données du système de transfert de données externe et le module de condensateur comprend un dispositif de commande (119) connecté à l'interface de données et à l'équipement de mesure, le dispositif de commande étant configuré pour générer des données associées à un stockage de données capacitif comprenant le module de condensateur et un ou plusieurs autres modules de condensateur sur la base des données mesurées et des données reçues du système de transfert de données externe.

7. Module de condensateur selon la revendication 6, dans lequel le dispositif de commande est configuré pour générer des données indiquant une tension du stockage d'énergie capacitif sur la base de données indiquant les tensions du module de condensateur et du ou des autres modules de condensateur et/ou un courant du stockage d'énergie capacitif sur la base de données indiquant les courants du module de condensateur et du ou des autres modules de condensateur et/ou une température maximale du stockage d'énergie capacitif sur la base de données indiquant les températures du module de condensateur et du ou des autres modules de condensateur.

8. Module de condensateur selon l'une quelconque des revendications 1 à 7, dans lequel l'élément de condensateur comprend un ou plusieurs condensateurs à double couche électriques.

9. Stockage d'énergie capacitif comprenant :
- un système de condensateur comprenant au moins deux modules de condensateur interconnectés électriquement (230-232) comprenant chacun un élément de condensateur, une première borne de tension connectée à un premier pôle de l'élément de condensateur, une seconde borne de tension connectée à un second pôle de l'élément de condensateur, un système de canalisation de refroidissement pour refroidir l'élément de condensateur, et un boîtier encapsulant l'élément de condensateur et le système de canalisation de refroidissement, le boîtier comprenant des passages de câblage pour les première et seconde bornes de tension et des passages de tuyauterie pour le système de canalisation de refroidissement, et des parois du système de canalisation de refroidissement isolant l'espace intérieur du système de canalisation de refroidissement de l'espace entourant le système de canalisation de refroidissement à l'intérieur du boîtier, et
- une tuyauterie (233) connectant les systèmes de canalisation de refroidissement des modules de condensateur les uns aux autres de manière à permettre au stockage d'énergie capacitif d'être connecté à un système de circulation de liquide de refroidissement externe,
dans lequel l'un des modules de condensateur est un premier module de condensateur (230) selon l'une quelconque des revendications 1 à 8.

10. Stockage d'énergie capacitif selon la revendication 9, dans lequel chacun des modules de condensateur comprend un équipement de mesure situé à l'intérieur du boîtier du module de condensateur et configuré pour mesurer des données associées à ce module de condensateur, et chacun des modules de condensateur comprend une interface de données capable de transmettre les données mesurées à un système de transfert de données externe.

11. Stockage d'énergie capacitif selon la revendication 9 ou 10, dans lequel le stockage d'énergie capacitif comprend au moins un convertisseur de puissance électronique connecté au système de condensateur et configuré pour modifier la tension du système de condensateur, le convertisseur de puissance électronique comprenant la bobine d'induction (208) située à l'intérieur du boîtier du premier module de condensateur et un circuit électronique de puissance (234) situé à l'extérieur des boîtiers des modules de condensateur.

12. Stockage d'énergie capacitif selon la revendication 11, dans lequel le stockage d'énergie capacitif comprend une canalisation de refroidissement connectée à la tuyauterie et configurée pour refroidir le circuit électronique de puissance du convertisseur de puissance électronique.

13. Stockage d'énergie capacitif selon la revendication 11 ou 12, dans lequel le circuit électronique de puissance (234) du convertisseur de puissance électronique comprend un premier noeud électrique (237), un deuxième noeud électrique (238) connecté au système de condensateur, un troisième noeud électrique (239) connecté à la bobine d'induction (208), et des interrupteurs d'alimentation pouvant être commandés (240, 241) pour sélectionner si le troisième noeud électrique est connecté au premier noeud électrique ou au deuxième noeud électrique.

14. Stockage d'énergie capacitif selon l'une quelconque des revendications 10 à 13, dans lequel le premier module de condensateur comprend un dispositif de commande (219) situé à l'intérieur du boîtier du premier module de condensateur et connecté à l'interface de données du premier module de condensateur et à l'équipement de mesure du premier module de condensateur, le dispositif de commande étant configuré pour générer des données associées au stockage d'énergie capacitif au moins partiellement sur la base de données mesurées dans les modules de condensateur.

15. Stockage d'énergie capacitif selon la revendication 14, dans lequel le premier module de condensateur comprend un ou plusieurs relais de protection (280, 281) situés à l'intérieur du boîtier du premier module de condensateur et le dispositif de commande (219) est configuré pour commander les relais de protection pour stopper le courant du stockage d'énergie capacitif en réponse à au moins l'une des situations suivantes : le courant du stockage d'énergie capacitif excède un courant limite prédéterminé, la tension du stockage d'énergie capacitif excède une tension limite prédéterminée, la température du stockage d'énergie capacitif excède une température limite prédéterminée.

16. Stockage d'énergie capacitif selon l'une quelconque des revendications 9 à 14, dans lequel le premier module de condensateur comprend un détecteur de courant de défaut (282) situé à l'intérieur du boîtier du premier module de condensateur et configuré pour détecter un courant de fuite entre une borne à haute tension du système de condensateur et les boîtiers des modules de condensateur et un courant de fuite entre une borne à basse tension du système de condensateur et les boîtiers des modules de condensateur.

17. Machine de travail mobile (380) comprenant :
- un moteur à combustion (381), et
- une chaîne de transmission de puissance électromécanique (382) entre le moteur à combustion et un ou plusieurs actionneurs de la machine de travail mobile,
dans laquelle la chaîne de transmission de puissance électromécanique comprend un stockage d'énergie capacitif (385) selon l'une quelconque des revendications 9 à 16.

18. Machine de travail mobile selon la revendication 17, dans laquelle la machine de travail mobile comprend un système de refroidissement par liquide (386) connecté à la tuyauterie du stockage d'énergie capacitif et configuré pour refroidir la chaîne de transmission de puissance électromécanique et un système hydraulique (387) de la machine de travail mobile.

19. Machine de travail mobile selon la revendication 17, dans laquelle la machine de travail mobile comprend un système de refroidissement par liquide (386) connecté à la tuyauterie du stockage d'énergie capacitif et configuré pour refroidir la chaîne de transmission de puissance électromécanique et le moteur à combustion.
